# FASCICULE DE BREVET EUROPEEN

(11) **EP 1 972 243 B1**
(45) Date de publication et mention de la délivrance du brevet: **16.05.2018**
(21) Numéro de dépôt: 08356041.7
(22) Date de dépôt: 13.03.2008
(51) Int. Cl.: A47J 45/06, A47J 45/08

(54) **Dispositif de fixation de poignée d'epaisseur reduite sur un article culinaire**
Befestigungsvorrichtung eines Griffs mit verringerter Dicke auf einem Kochgerät
Device for attaching a handle with minimum thickness to a culinary item

(30) Priorité: 21.03.2007 FR 0702041
(43) Date de publication de la demande: 24.09.2008
(73) Titulaire: SEB S.A., 69130 Ecully (FR)
(72) Inventeur: Cuillery, Pascal, 74210 Faverges (FR); Plichon, Stéphane, 74000 Annecy (FR); Brasset, Jean-François, 74000 Annecy (FR)
(74) Mandataire: Rivière, Sophie

(56) Documents cités:
- EP-A- 1 304 065
- FR-A- 2 863 470
- GB-A- 1 555 031

## Description

La présente invention concerne un dispositif de fixation d'une poignée sur un article culinaire tel qu'une casserole, une poêle, etc.

On connaît du document US 2787805 un dispositif de fixation d'une poignée sur une paroi latérale ou calotte d'un article culinaire du type comprenant un goujon moulé attenant à la paroi de l'article culinaire, de section carrée, comportant à son extrémité un orifice taraudé. L'extrémité de la poignée est apte à accoster la calotte de l'article culinaire et comporte un logement qui coopère avec la section carrée du goujon et assure le positionnement dans deux directions perpendiculaires à l'axe de la poignée, une horizontale et une verticale. Dans le prolongement du logement, la poignée comporte un passage et une zone d'appui pour une vis qui coopère avec l'orifice taraudé du goujon. Une embase faisant office de pare flamme est fixée sous l'extrémité de la poignée.

Ce dispositif de fixation présente l'inconvénient de ne pas être durable car l'assemblage de la poignée sur la calotte de l'article culinaire prend rapidement du jeu. En effet, la matière de la poignée, directement en contact avec la calotte de l'article culinaire, est soumise aux cycles de chauffe et refroidissement et se dégrade au cours du temps.

De plus, ce dispositif de fixation nécessite une construction massive de l'extrémité de la poignée. En effet, la matière plastique couramment utilisée pour la poignée est du type thermodurcissable. Cette matière nécessite des épaisseurs de parois importantes pour obtenir des caractéristiques mécaniques suffisantes et supporter les sollicitations de l'utilisateur.

Le document GB 1077475 décrit un autre exemple d'un dispositif de fixation d'une poignée sur une calotte d'un article culinaire du type comprenant un goujon apte à être fixé à la calotte de l'article culinaire par une première extrémité, ainsi qu'un réflecteur ou embase entourant l'extrémité de la poignée, apte à s'accoster contre la calotte de l'article culinaire par une première extrémité et à recevoir en butée contre sa deuxième extrémité un épaulement de la poignée. La deuxième extrémité du goujon comprend des moyens aptes à assurer la fixation axiale de la poignée, et comprend également des moyens aptes à assurer la mise en place de la poignée par emboîtement. En d'autres termes, l'épaulement de l'extrémité de la poignée délimite une protubérance sensiblement parallélépipédique, également appelée carré, qui présente en son centre un logement de réception du goujon.

Ce dispositif de fixation améliore les problèmes de vieillissement du dispositif cité précédemment. Cependant, lorsque l'utilisateur prend l'article culinaire à pleine charge, la matière de la poignée située entre le goujon et la face supérieure de l'embase est très sollicitée et entraîne un risque de rupture de la poignée. De plus, ce dispositif présente également l'inconvénient de nécessiter une construction de l'extrémité de la poignée massive, peu économique.

Une solution améliorée a été décrite dans le document US 4032032. Le dispositif de fixation d'une poignée sur une calotte d'un article culinaire comprend un goujon apte à être fixé à la calotte de l'article culinaire par une première extrémité et comportant à sa deuxième extrémité un orifice taraudé, une embase entourant l'extrémité de la poignée, apte à s'accoster contre la calotte de l'article culinaire par une première extrémité et à recevoir en butée contre sa deuxième extrémité un épaulement de la poignée. Le dispositif comporte également une bague qui comprend d'une part, une ouverture dont la section correspond à celle du goujon de façon à être immobilisée par ce dernier, et, d'autre part, une section extérieure qui correspond à la section intérieure de l'embase de façon à être immobilisée par rapport à cette dernière. Dans ce dispositif, la poignée n'est pas positionnée sur le goujon mais dans l'embase.

Ce dispositif de fixation présente l'inconvénient de nécessiter une pièce supplémentaire d'où un surcoût lors de la fabrication. De plus, les tolérances de fabrication de cette pièce font que l'on rajoute des dispersions supplémentaires dans l'assemblage de la poignée sur l'article culinaire.

Le but de la présente invention est de remédier aux inconvénients précités et de proposer un dispositif de fixation qui soit économique en minimisant le nombre de pièces mises en oeuvre et la quantité de matière mise en oeuvre au niveau de l'extrémité de la poignée.

Un autre but de l'invention est de proposer un dispositif de fixation qui assure une fixation sûre et durable.

Un autre but de l'invention est de proposer un dispositif de fixation qui soit affiné au niveau de l'embase et de l'extrémité de la poignée dans une direction verticale.

Ces buts sont atteints avec un dispositif de fixation d'une poignée sur une calotte d'un article culinaire comprenant un goujon adapté à être fixé par sa première extrémité antérieure à la calotte de l'article culinaire et comprenant une ouverture à sa deuxième extrémité postérieure , une poignée dont une extrémité comporte au moins une protubérance formant un logement qui est adapté à recevoir le goujon et qui est prolongé par un orifice traversant permettant le passage d'une vis et son insertion dans l'ouverture du goujon, une embase qui est adaptée à entourer le goujon et la protubérance de la poignée et qui relie longitudinalement la poignée à la calotte de l'article culinaire , du fait que la ou les protubérances de la poignée viennent en contact de part et d'autre du goujon dans un axe transversal latéral et que l'embase comporte des moyens de positionnement dans un axe transversal vertical contre le goujon et contre la poignée.

Selon l'invention, le dispositif de fixation permet un positionnement précis et direct de la poignée sur le goujon dans une direction transversale horizontale grâce à un jeu faible entre les parois des protubérances de la poignée et les faces latérales du goujon. Cette construction permet également d'éviter la rotation de l'article culinaire autour de l'axe longitudinal de la poignée. Cette disposition permet également de réaliser un positionnement dans la direction transversale verticale de la poignée directement par l'embase sur le goujon. Cette construction est très économique au niveau de la quantité de matière mise en oeuvre au niveau de la poignée.

De préférence, les moyens de positionnement de l'embase contre le goujon sont constitués par une nervure située sur la face interne de la partie inférieure de l'embase coopérant avec une arête située en partie inférieure de l'extrémité postérieure du goujon.

Cette disposition permet de réaliser un appui de l'embase sur le goujon sans pièce rapportée, la nervure étant fabriquée directement dans le procédé de réalisation de l'embase, de préférence par filage d'aluminium.

Avantageusement, les moyens de positionnement de l'embase contre le goujon sont constitués par une nervure située sur la face interne de la partie inférieure de l'embase coopérant avec une ligne médiane de la face inférieure du goujon.

De préférence, les moyens de positionnement de la partie supérieure de l'embase contre le goujon sont constitués par l'arête inférieure de la tranche supérieure de son extrémité antérieure coopérant avec une face supérieure du goujon.

Cette disposition, avec les deux dispositions précédentes, permet une construction affinée de l'embase dans une direction transversale verticale.

Avantageusement, les moyens de positionnement de l'embase contre la poignée sont constitués par la tranche inférieure de son extrémité postérieure coopérant avec un épaulement ménagé en partie inférieure de l'extrémité de la poignée.

De préférence, les moyens de positionnement de l'embase contre la poignée sont constitués par l'arête supérieure de la tranche inférieure de son extrémité postérieure coopérant avec au moins une face inférieure des protubérances de l'extrémité de la poignée.

Avantageusement, les surfaces externes des deux protubérances comportent chacune au moins une face de contact latérale avec l'embase de manière à positionner celle-ci par rapport à la poignée dans l'axe transversal latéral.

De préférence, les surfaces externes des deux protubérances comportent au moins deux faces de contact verticales avec l'embase de manière à positionner celle-ci par rapport à la poignée dans l'axe transversal vertical.

Ces deux dernières dispositions permettent de positionner l'extrémité de la poignée dans une embase d'épaisseur réduite donc d'obtenir une construction affinée de l'extrémité de la poignée. Ceci permet éventuellement l'ajout de fonctionnalités supplémentaires ; par exemple un module de prise de température ou un capot anti projection sur l'embase ou un dispositif de rotation de la poignée.

De préférence, les surfaces externes des deux protubérances comportent une dépouille par rapport à l'axe longitudinal de la poignée.

Par dépouille, on comprend que les protubérances présentent une forme tronconique, c'est-à-dire que la section des protubérances devient plus petite côté extrémité antérieure de la poignée.

Cette disposition permet de positionner la poignée dans l'embase uniquement à la base des deux protubérances. Lorsque l'utilisateur manipule l'article culinaire, la matière constituant les deux protubérances n'est pas sollicitée en flexion. Ce qui assure une fixation sûre et durable.

Avantageusement, l'extrémité de la poignée comporte un retour de matière sur la partie supérieure de l'embase.

Cette disposition permet de réaliser un capot de protection vis-à-vis de l'embase pour faciliter le nettoyage. En effet, lors de l'utilisation de l'article culinaire, l'embase en contact avec la calotte s'échauffe. Les projections qui tombent sur cette embase vont sécher, voire carboniser et donc fortement adhérer, d'où la difficulté du nettoyage. Avec un retour de matière qui est froid puisqu'il n'est pas en contact avec la calotte, les projections seront faciles à nettoyer.

L'invention sera mieux comprise à l'étude des modes de réalisation pris à titre nullement limitatif et illustrés dans les figures annexées dans lesquelles :
- La figure 1 est une vue éclatée en perspective d'un dispositif de fixation d'une poignée sur une calotte d'un article culinaire selon l'invention.
- La figure 2 illustre une vue en coupe du dispositif de la figure 1 suivant l'axe de la poignée.

Le dispositif de fixation 1 selon la présente invention permet de fixer une poignée 3 à une calotte 6 d'un article culinaire 2. Il est constitué d'un goujon 5, d'une embase 8 entourant une extrémité 30 de la poignée 3 et d'une vis 4.

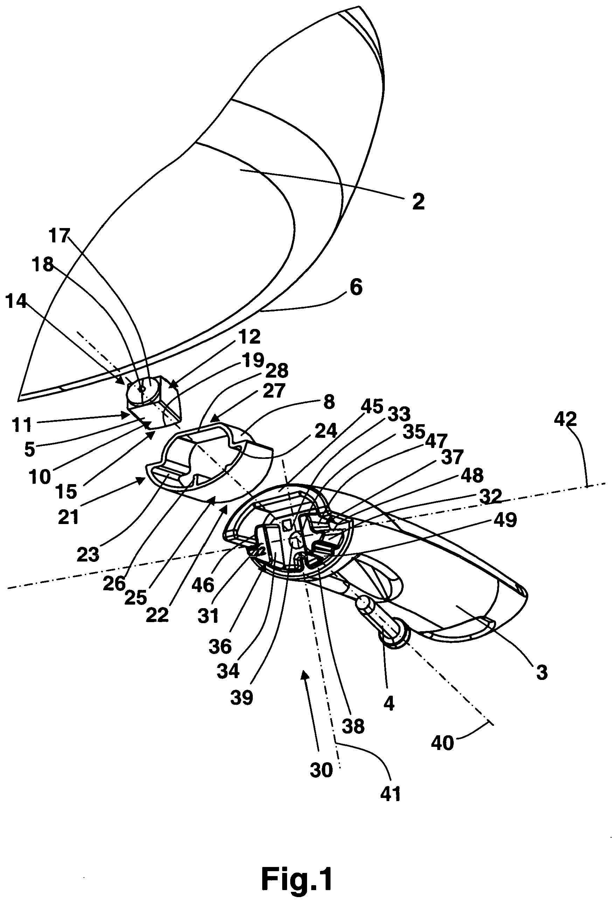

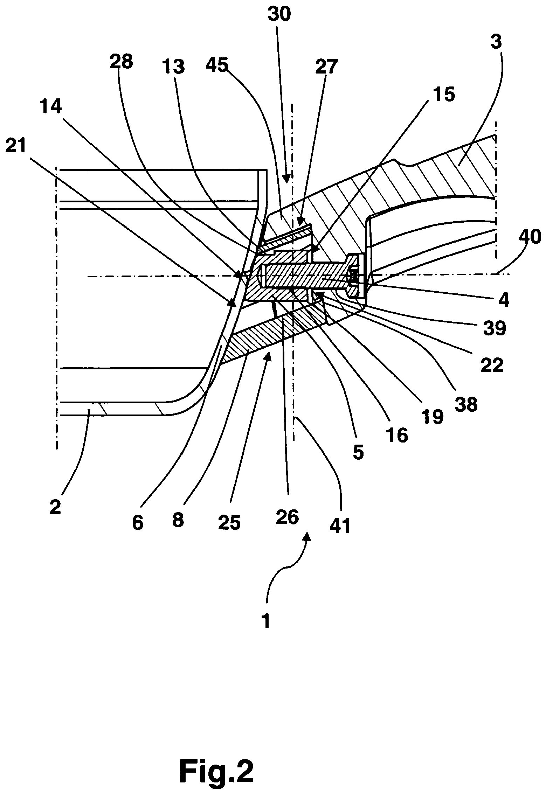

Tel que visible aux figures 1 et 2, le goujon 5 a la forme générale d'un prisme qui peut être de base carrée et d'axe longitudinal 40. Ledit goujon 5 comporte une première extrémité antérieure 14 adaptée à être fixée à la calotte 6 de l'article culinaire 2, ainsi qu'une deuxième extrémité postérieure 15 comprenant une ouverture aveugle 16 qui reçoit la vis 4. L'extrémité antérieure 14 du goujon 5 est conformée de façon à faciliter sa fixation par soudage à la calotte 6 de l'article culinaire 2 et comporte un disque bombé 17 muni d'une pointe 18 dirigée vers l'extérieur.

L'embase 8 a une forme générale d'un tube creux qui peut être à base sensiblement ovale. L'embase 8 possède une première extrémité antérieure 21 adaptée à accoster la calotte 6 de l'article culinaire 2 et une deuxième extrémité postérieure 22 apte à recevoir la poignée 3 en butée. Pour réaliser un accostage correct de l'extrémité antérieure 21 de l'embase 8 à la calotte 6 de l'article culinaire 2, la surface ou tranche définie par cette extrémité 21 et la zone de la calotte 6 à laquelle elle va s'accoster, sont sensiblement parallèles.

L'extrémité 30 de la poignée 3 comprend deux protubérances 31,32 faisant saillies, disposées de part et d'autre d'un axe transversal vertical 41, perpendiculaire à l'axe 40 de la poignée 3, et séparées par un espace formant un logement 33 apte à recevoir le goujon 5. Ledit logement 33 comporte deux faces planes constituées par deux parois internes 34,35 des deux protubérances 31,32, aptes à coopérer avec deux faces latérales 11,12 du goujon 5 ; ce qui permet d'immobiliser la poignée 3 sur le goujon 5 dans un axe transversal latéral 42, perpendiculaire à l'axe 40 de la poignée 3 et par là même d'empêcher la rotation de la poignée 3 autour de son axe longitudinal 40.

L'extrémité 30 de la poignée 3 formée par les deux protubérances 31,32 est apte à s'emboîter dans l'embase 8. Les protubérances 31,32, comportent dans leurs parties externes, des surfaces 36,37 adaptées aux surfaces latérales internes 23,24 de l'embase 8. Les surfaces externes 36,37 comportent chacune une face de contact latéral 46,47 avec l'embase 8 de manière à positionner celle-ci par rapport à la poignée 3 dans l'axe transversal latéral 42. Les surfaces externes 36,37 des protubérances 31,32 comportent également deux faces de contact verticales 48,49 avec l'embase 8 de manière à positionner celle-ci par rapport à la poignée 3 dans l'axe transversal vertical 41.

Les surfaces externes 36,37 des deux protubérances 31,32 comportent une dépouille par rapport à l'axe longitudinal 40 de la poignée 3. En d'autres termes, on comprend que les protubérances 31,32 présentent une forme tronconique, c'est-à-dire que la section des protubérances devient plus petite côté extrémité antérieure de la poignée 3. Cette dépouille peut être variable entre la partie supérieure et inférieure des deux protubérances 31,32.

L'extrémité 30 de la poignée 3 est limitée par un épaulement 38, périphérique aux deux protubérances 31,32 qui est apte à venir en butée contre la tranche de l'extrémité postérieure 22 de l'embase 8, ce qui définit l'enfoncement maximal des protubérances 31,32 dans l'embase 8. L'arête supérieure de la tranche inférieure de l'extrémité postérieure 22 de l'embase 8 est en appui sur la face inférieure des protubérances 31,32.

L'embase 8 comporte, sur la face interne de sa partie inférieure 25, une nervure 26 qui prend appui sur une arête 19 située en partie inférieure de l'extrémité postérieure 15 du goujon 5 ou, dans un autre mode de réalisation, qui prend appui sur une ligne médiane de la face inférieure 10 du goujon 5.

Dans la tranche supérieure de son extrémité antérieure 21, l'embase 8 comprend une arête inférieure 28 qui prend appui sur une face supérieure 13 du goujon 5.

Un orifice 39 traversant est réalisé dans l'extrémité 30 de la poignée 3, dans le prolongement du logement 33. La vis 4 préalablement engagée dans l'orifice 39 est apte à coopérer avec l'ouverture aveugle 16 du goujon. L'orifice 39 comporte un épaulement contre lequel la tête de la vis est apte à venir en butée. La vis 4 peut être auto taraudeuse pour supprimer l'opération de taraudage de l'ouverture aveugle 16 du goujon et réduire le coût de fabrication du dispositif.

Les protubérances de l'extrémité de la poignée qui subsistent du carré antérieurement connu, ont une fonction réduite à un strict minimum de positionnement selon l'axe transversal latéral 42 de la poignée 3 sur le goujon 5. Lors de l'utilisation de l'article culinaire, l'embase 8 au niveau mécanique, est maintenue dans sa fonction primordiale : elle présente une partie en compression prise dans le couple antagoniste entre la liaison supérieure par vis 4 - poignée 3 - goujon 5 et la liaison inférieure calotte 6 - embase 8 - poignée 3. Notamment, cette zone comprimée est très sollicitée et sujette aux échauffements de la table de cuisson. La partie supérieure de l'embase 8 participe uniquement au positionnement sur le goujon grâce à sa partie antérieure, la partie supérieure postérieure étant mécaniquement de moindre importance.

A titre d'illustration d'une fonctionnalité supplémentaire permise par le dispositif de fixation selon l'invention, l'extrémité 30 de la poignée 3 comporte un retour de matière 45 qui coiffe la partie supérieure 27 de l'embase 8. La distance entre l'extrémité du retour de matière 45 et la calotte 6 est inférieure à trois millimètres. Ce retour de matière fait office de capot de protection de l'embase 8 vis-à-vis des projections et facilite le nettoyage. Dans un autre mode de réalisation de cette fonctionnalité, on réalise une échancrure dans le bord supérieur postérieur de l'embase 8 et on remplit l'échancrure réalisée par un retour de matière de la poignée. Ce mode de réalisation permet une construction encore plus affinée de l'extrémité de la poignée 3.

Pour fixer la poignée 3 à l'article culinaire 2 en utilisant le dispositif de fixation 1 selon l'invention, on fixe d'abord l'extrémité antérieure 14 du goujon 5 à la calotte 6 de l'article culinaire 2, par exemple par soudage.

On introduit les deux protubérances 31,32 de l'extrémité 30 de la poignée 3 dans l'extrémité postérieure 22 de l'embase 8. On positionne ensuite les faces planes 34,35 des deux protubérances 31,32 de la poignée 3 ainsi que l'embase 8 autour du goujon 5. On engage enfin la vis 4 dans l'orifice 39 de la poignée 3 et, comme l'orifice 39 et l'ouverture aveugle 16 du goujon 5 sont en regard l'un de l'autre, la vis 4 pénètre dans cette ouverture aveugle 16.

L'orifice 39 comporte un épaulement contre lequel la tête de vis 4 est apte à venir en butée. En poursuivant le vissage, la tranche de l'extrémité antérieure 21 de l'embase 8 va se trouver plaquée contre la calotte 6 de l'article culinaire et la tranche de l'extrémité postérieure 22 de l'embase 8 va se trouver plaquée contre l'épaulement 38 de la poignée 3. En fin de vissage, l'effort radial exercé par l'embase 8 sur la calotte inclinée de l'article culinaire 2 va induire que l'arête inférieure 28 de la tranche supérieure de l'extrémité antérieure 21 de l'embase 8 vienne en pression sur la face supérieure 13 du goujon 5.

La présente invention n'est nullement limitée à l'exemple de réalisation décrit et à ses variantes, mais englobe de nombreuses modifications dans le cadre des revendications.

Ainsi, les moyens de positionnement de l'embase 8 contre le goujon 5 peuvent être constitués par la face interne de la partie inférieure 25 de l'embase 8 coopérant directement avec une arête 19 située en partie inférieure de l'extrémité postérieure 15 du goujon 5.

Egalement, les moyens de positionnement de l'embase 8 contre le goujon 5 peuvent être constitués par au moins une nervure située sur la face interne de la partie supérieure 27 de l'embase 8 coopérant avec une face supérieure 13 du goujon 5.

Ces deux variantes permettent de modifier la position de l'embase 8 par rapport au goujon 5 et éventuellement, avec la première variante, d'affiner encore plus l'embase dans l'axe transversal vertical 41.

## Revendications

1. Dispositif de fixation d'une poignée (3) sur une calotte (6) d'un article culinaire (2) comprenant un goujon (5) adapté à être fixé par sa première extrémité antérieure (14) à la calotte (6) de l'article culinaire (2) et comprenant une ouverture (16) à sa deuxième extrémité postérieure (15), une poignée (3) dont une extrémité (30) comporte au moins une protubérance (31,32) formant un logement (33) qui est adapté à recevoir le goujon (5) et qui est prolongé par un orifice (39) traversant permettant le passage d'une vis (4) et son insertion dans l'ouverture (16) du goujon (5), une embase (8) qui est adaptée à entourer le goujon (5) et la protubérance (31,32) de la poignée (3) et qui relie longitudinalement la poignée (3) à la calotte (6) de l'article culinaire (2) ; la ou les protubérances (31,32) de la poignée (3) venant en contact de part et d'autre du goujon (5) dans un axe transversal latéral (42) pour permettre un positionnement précis et direct de la poignée (3) sur le goujon (5) dans une direction transversale horizontale **caractérisé en ce que** l'embase (8) comporte des moyens de positionnement dans un axe transversal vertical (41) contre le goujon (5) et contre la poignée (3) pour permettre de réaliser un positionnement de la poignée (3) directement par l'embase (8) sur le goujon (5) dans la direction transversale verticale.

2. Dispositif de fixation selon la revendication 1, **caractérisé en ce que** les moyens de positionnement de l'embase (8) contre le goujon (5) sont constitués par une nervure (26) située sur la face interne de la partie inférieure (25) de l'embase (8) coopérant avec une arête (19) située en partie inférieure de l'extrémité postérieure (15) du goujon (5).

3. Dispositif de fixation selon l'une des revendications 1 ou 2, **caractérisé en ce que** les moyens de positionnement de l'embase (8) contre le goujon (5) sont constitués par une nervure (26) située sur la face interne de la partie inférieure (25) de l'embase (8) coopérant avec une ligne médiane de la face inférieure (10) du goujon (5).

4. Dispositif de fixation selon l'une des revendications 1 à 3, **caractérisé en ce que** les moyens de positionnement de la partie supérieure (27) de l'embase (8) contre le goujon (5) sont constitués par l'arête inférieure (28) de la tranche supérieure de son extrémité antérieure (21) coopérant avec une face supérieure (13) du goujon (5).

5. Dispositif de fixation selon l'une des revendications 1 à 4, **caractérisé en ce que**, les moyens de positionnement de l'embase (8) contre la poignée (3) sont constitués par la tranche inférieure de son extrémité postérieure (22) coopérant avec un épaulement (38) ménagé en partie inférieure de l'extrémité (30) de la poignée (3).

6. Dispositif de fixation selon l'une des revendications 1 à 5, **caractérisé en ce que**, les moyens de positionnement de l'embase (8) contre la poignée (3) sont constitués par l'arête supérieure de la tranche inférieure de son extrémité postérieure (22) coopérant avec au moins une face inférieure des protubérances (31,32) de l'extrémité (30) de la poignée (3).

7. Dispositif de fixation selon l'une des revendications 1 à 6, **caractérisé en ce que**, les surfaces externes (36,37) des deux protubérances (31,32) comportent chacune au moins une face de contact latérale (46,47) avec l'embase (8) de manière à positionner celle-ci par rapport à la poignée (3) dans l'axe transversal latéral (42).

8. Dispositif de fixation selon l'une des revendications 1 à 7, **caractérisé en ce que**, les surfaces externes (36,37) des deux protubérances (31,32) comportent au moins deux faces de contact verticales (48,49) avec l'embase (8) de manière à positionner celle-ci par rapport à la poignée (3) dans l'axe transversal vertical (41).

9. Dispositif de fixation selon l'une des revendications 1 à 8, caractérisé en ce ue, les surfaces externes (36,37) des deux protubérances (31,32) comportent une dépouille par rapport à l'axe longitudinal de la poignée (3).

10. Dispositif de fixation selon l'une des revendications 1 à 9, **caractérisé en ce que**, l'extrémité (30) de la poignée (3) comporte un retour de matière (45) sur la partie supérieure (27) de l'embase (8).

## Patentansprüche

1. Vorrichtung zur Befestigung eines Handgriffs (3) auf einer Kappe (6) eines Kochutensils (2), die einen Stift (5) aufweist, der eingerichtet ist, mit seinem ersten vorderen Ende (14) an der Kappe (6) des Kochutensils (2) befestigt zu werden, und eine Öffnung (16) am zweiten hinteren Ende (15), einen Handgriff (3), von dem eine Ende (30) mindestens ein Vorsprung (31, 32) aufweist, der ein Gehäuse (33) bildet, das eingerichtet ist, den Stift (5) aufzunehmen, und der durch eine durchgehende Öffnung (39) verlängert ist, die den Durchtritt einer Schraube (4) und seine Einführung in die Öffnung (16) des Stifts (5) ermöglicht, eine Basis (8) umfasst, die eingerichtet ist, den Stift (5) und den Vorsprung (31, 32) des Handgriffs (3) zu umgeben, und die in Längsrichtung den Handgriff (3) mit der Kappe (6) des Kochutensils (2) verbindet; wobei der eine oder die Vorsprünge (31, 32) des Handgriffs (3) auf beiden Seiten des Stifts (5) in einer seitlichen Querachse (42) in Kontakt kommen, um eine präzise und direkte Positionierung des Handgriffs (3) auf dem Stift (5) in einer horizontalen Querrichtung zu ermöglichen, **dadurch gekennzeichnet, dass** die Basis (8) Mittel zur Positionierung in einer vertikalen Querachse (41) gegen den Stift (5) und gegen den Handgriff (3) aufweist, um es zu ermöglichen, eine Positionierung des Handgriffs (3) direkt durch die Basis (8) auf dem Stift (5) in der vertikalen Querrichtung zu realisieren.

2. Vorrichtung zur Befestigung nach Anspruch 1, **dadurch gekennzeichnet, dass** die Mittel zur Positionierung der Basis (8) gegen den Stift (5) durch eine Rippe (26) gebildet sind, die sich an der inneren Fläche des unteren Teils (25) der Basis (8) befindet, die mit einem Rand (19) zusammenwirkt, der sich im unteren Teil des hinteren Endes (15) des Stifts (5) befindet.

3. Vorrichtung zur Befestigung nach einem der Ansprüche 1 oder 2, **dadurch gekennzeichnet, dass** die Mittel zur Positionierung der Basis (8) gegen den Stift (5) durch eine Rippe (26) gebildet sind, die sich an der inneren Fläche des unteren Teils (25) der Basis (8) befindet, die mit einer Mittellinie der unteren Seite (10) des Stifts (5) zusammenwirkt.

4. Vorrichtung zur Befestigung nach einem der Ansprüche 1 bis 3, **dadurch gekennzeichnet, dass** die Mittel zur Positionierung des oberen Teils (27) der Basis (8) gegen den Stift (5) durch den unteren Rand (28) des oberen Abschnitts seines vorderen Endes (21) gebildet sind, das mit einer oberen Seite (13) des Stifts (5) zusammenwirkt.

5. Vorrichtung zur Befestigung nach einem der Ansprüche 1 bis 4, **dadurch gekennzeichnet, dass** die Mittel zur Positionierung der Basis (8) gegen den Handgriff (3) durch den unteren Abschnitt seines hinteren Endes (22) gebildet sind, das mit einer Schulter (38) zusammenwirkt, die an dem unteren Teil des Endes (30) des Handgriffs (3) ausgebildet ist.

6. Vorrichtung zur Befestigung nach einem der Ansprüche 1 bis 5, **dadurch gekennzeichnet, dass** die Mittel zur Positionierung der Basis (8) gegen den Handgriff (3) durch den oberen Rand des unteren Abschnitts von seinem hinteren Ende (22) gebildet sind, das mit mindestens einer unteren Seite der Vorsprünge (31, 32) des Endes (30) des Handgriffs (3) zusammenwirkt.

7. Vorrichtung zur Befestigung nach einem der Ansprüche 1 bis 6, **dadurch gekennzeichnet, dass** die äußeren Flächen (36, 37) der beiden Vorsprünge (31, 32) jeweils mindestens eine laterale Kontaktfläche (46, 47) mit der Basis (8) aufweisen, um die letztere relativ zu dem Handgriff (3) in der seitlichen Querachse (42) zu positionieren.

8. Vorrichtung zur Befestigung nach einem der Ansprüche 1 bis 7, **dadurch gekennzeichnet, dass** die äußeren Flächen (36, 37) der beiden Vorsprünge (31, 32) mindestens zwei vertikale Kontaktflächen (48, 49) mit der Basis (8) aufweisen, um die letztere relativ zu dem Handgriff (3) in der vertikalen Querachse (41) zu positionieren.

9. Vorrichtung zur Befestigung nach einem der Ansprüche 1 bis 8, **dadurch gekennzeichnet, dass** die äußeren Flächen (36, 37) der zwei Vorsprünge (31, 32) eine Hinterschneidung in Bezug auf die Längsachse des Handgriffs (3) aufweisen.

10. Vorrichtung zur Befestigung nach einem der Ansprüche 1 bis 9, **dadurch gekennzeichnet, dass** das Ende (30) des Handgriffs (3) eine Materialrückführung (45) auf dem oberen Teil (27) der Basis (8) aufweist.

## Claims

1. Device for attaching a handle (3) on a cap (6) of a cooking utensil (2) comprising a dowel (5) adapted to be attached on the first front end (14) thereof to the cap (6) of the cooking utensil (2) and comprising an opening (16) to the second rear end (15), a handle (3) of which one end (30) comprises at least one protrusion (31, 32) forming a housing (33) which is adapted to receive the dowel (5) and which is extended by a through-hole (39) enabling the passage of a screw (4) and the insertion thereof into the opening (16) of the dowel (5), a baseplate (8) which is adapted to surround the dowel (5) and the protrusion (31, 32) of the handle (3) and which longitudinally connects the handle (3) to the cap (6) of the cooking utensil (2); the protrusion(s) (31, 32) of the handle (3) contacting either side of the dowel (5) in a lateral transversal axis (42) to enable a specific and direct positioning of the handle (3) on the dowel (5) in a horizontal transversal direction **characterised in that** the baseplate (8) comprises means for positioning in a vertical transversal axis (41) against the dowel (5) and against the handle (3) to enable a positioning of the handle (3) to be achieved directly by the baseplate (8) on the dowel (5) in the vertical transversal direction.

2. Attachment device according to claim 1, **characterised in that** the means for positioning the baseplate (8) against the dowel (5) are constituted by a ridge (26) located on the inner face of the lower part (25) of the baseplate (8) cooperating with an edge (19) located in the lower part of the rear end (15) of the dowel (5).

3. Attachment device according to one of the claims 1 or 2, **characterised in that** the means for positioning the baseplate (8) against the dowel (5) are constituted by a ridge (26) located on the inner face of the lower part (25) of the baseplate (8) cooperating with a median line of the lower face (10) of the dowel (5).

4. Attachment device according to one of the claims 1 to 3, **characterised in that** the means for positioning the upper part (27) of the baseplate (8) against the dowel (5) are constituted by the lower edge (28) of the upper portion of the front end (21) thereof cooperating with an upper face (13) of the dowel (5).

5. Attachment device according to one of the claims 1 to 4, **characterised in that** the means for positioning the baseplate (8) against the handle (3) are constituted by the lower portion of the rear end (22) thereof cooperating with a flange (38) arranged in the lower part of the end (30) of the handle (3).

6. Attachment device according to one of the claims 1 to 5, **characterised in that** the means for positioning the baseplate (8) against the handle (3) are constituted by the upper edge of the lower portion of the rear end (22) thereof cooperating with at least one lower face of the protrusions (31, 32) of the end (30) of the handle (3).

7. Attachment device according to one of the claims 1 to 6, **characterised in that** the outer surfaces (36, 37) of the two protrusions (31, 32) each comprise at least one lateral contact face (46, 47) with the baseplate (8) so as to position it in relation to the handle (3) in the lateral transversal axis (42).

8. Attachment device according to one of the claims 1 to 7, **characterised in that** the outer surfaces (36, 37) of the two protrusions (31, 32) comprise at least two vertical contact faces (48, 49) with the baseplate (8) so as to position it in relation to the handle (3) in the vertical transversal axis (41).

9. Attachment device according to one of the claims 1 to 8, **characterised in that** the outer surfaces (36, 37) of the two protrusions (31, 32) comprise a strip in relation to the longitudinal axis of the handle (3).

10. Attachment device according to one of the claims 1 to 9, **characterised in that** the end (30) of the handle (3) comprises a material return (45) on the upper part (27) of the baseplate (8).
